(19)

Europäisches
Patentamt

European
Patent Office

Office européen
des brevets

(11) EP 1 854 362 A1

(12) EUROPEAN PATENT APPLICATION

(43) Date of publication:
14.11.2007 Bulletin 2007/46

(51) Int Cl.:
A23C 19/08 (2006.01)    A23J 1/20 (2006.01)
A23J 3/08 (2006.01)

(21) Application number: 07107511.3

(22) Date of filing: 04.05.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK YU

(30) Priority: 12.05.2006 US 383156

(71) Applicant: KRAFT FOODS HOLDINGS, INC.
Northfield,
Illinois 60093 (US)

(72) Inventors:
• Ma, Yinqing
  Arlington Heights, IL Illinois 60004 (US)
• Lindstrom, Ted Riley
  Punta Gorda, FL Florida 33950 (US)
• Schmidt, Gavin Matthew
  Evanston, IL Illinois 60201 (US)

(74) Representative: Smaggasgale, Gillian Helen
W.P. Thompson & Co,
55 Drury Lane
London WC2B 5SQ (GB)

(54) Modified Whey Protein for Low Casein Processed Cheese

(57) A processed cheese and method of forming the processed cheese are provided. The processed cheese generally includes between about 14 to about 16 protein, about 45 to about 50 percent moisture; and a ratio of casein protein to whey protein at least about 60:40. The method of forming the processed cheese includes thermally treating a whey protein at a protein concentration and pH sufficient to form whey protein aggregates, blending the thermally treated whey protein with a milk protein concentrate to form a slurry; and heating the slurry for a time and temperature sufficient to form the processed cheese. In one form, the processed cheese includes about 3 to about 6.3 percent modified whey protein.

Figure 1

EP 1 854 362 A1

**Description**

CROSS-REFERENCE TO RELATED APPLICATION

This application is a continuation-in-part of prior application number 11/301,450, filed December 13, 2005, which is hereby incorporated herein by reference in its entirety.

FIELD OF THE INVENTION

The invention relates to a method of modifying whey, and in particular, a method of thermally treating whey at low protein concentrations and within a predetermined pH range. In addition, the invention relates to a processed cheese, and in particular, a processed cheese with low levels of casein protein and high moisture using the thermally modified whey to maintain the desired cheese firmness.

BACKGROUND OF THE INVENTION

In a pasteurized processed cheese, the dairy solids and particularly the casein protein therewithin generally account for the desired cheese-like texture and firmness as well as provide nutritional benefits to the cheese. The casein protein, however, is one of the more expensive ingredients in the processed cheese. Accordingly, reducing the amount of casein protein and increasing the amount of moisture in a processed cheese would provide economical benefits by reducing manufacturing costs. However, maintaining the desired cheese-like texture, taste, and mouthfeel as well as maintaining the nutritional benefits in a processed cheese with lower levels of casein protein and higher levels of moisture is difficult to achieve.

Whey, which is the serum remaining after the fat and casein are removed from milk during cheese manufacture, often has little value in its aqueous or dried form if used in significant amounts in a processed cheese due to the undesired effects the whey has on the resultant processed cheese. On the other hand, as a by-product from the cheese manufacturing process, its increased incorporation as a protein source in processed cheese would be beneficial to reduce costs and maintain nutritional benefits so long as the processed cheese could be formulated with a suitable texture and firmness. However, replacing all or significant amounts of casein protein in processed cheese with whey protein, especially at high moisture levels (i.e., above about 45 percent), adversely alters the mouthfeel and other textural qualities of the processed cheese.

Attempts have been made to alter whey in order to render the whey more suitable as a food additive. For example, whey has been altered for use in liquid, semi-liquid, or soft food products, such as in salad dressings, mayonnaise, ice cream, custard, and artificial yogurt. Altered whey has also been used as a nutritional supplement in meat and meat products, flour based products, beverages, and desserts. In addition, whey has also been altered for use in a cheese, but such altered whey generally does not provide the desired functional properties to a cheese with high moisture (i.e., greater than about 45 percent). For instance, it has been difficult to form a cheese with acceptable levels of both firmness and texture with such high levels of moisture even with current altered whey.

GB Patent No. 2,063,273 and US Patent No. 6,139,900 disclose methods to alter whey protein in order to change the protein structure such that the whey is more useful as a food ingredient; however, such methods only disclose the altered whey as being suitable to thicken flowable food items such as dressings, yogurt, and infant formulas. Moreover, the resultant whey is generally unsuitable for direct use in processed cheese either because it does not produce the desired firmness or because the whey would most likely require additional processing prior to use in the cheese.

GB Patent No. 2,063,273 discloses a method of preparing soluble denatured whey protein compositions by raising the pH of a 2 to 4 percent whey protein solution to 6.5 to 8 and then heating the solution to 75°C to 90°C for 1 to 30 minutes. The processed whey is then used in salad dressing or artificial yogurt. This reference provides specific examples of altering whey with a whey protein concentration between 0.7 and 3 percent. It also discloses that altering whey at protein concentrations above 5 percent is not desired due to a risk that the protein will gel. A gelled whey protein is generally unsuitable for use as a food additive because it would be very difficult to concentrate, dry, or re-disperse using conventional methods. Additional processing steps to render a gelled whey suitable for use in foods would be time consuming and expensive.

US Patent No. 6,139,900 discloses a method of forming whey protein products using a complex two-step heating process where a whey protein solution of a predetermined concentration is heated to a first temperature and pH, allowed to cool, and then heated to a second temperature and pH. The first step thermally treats a 2 to 8 percent whey protein solution at a pH above 8 at 75° to 95°C for 10 to 120 minutes. After cooling to a temperature below 60°C, the second step thermally treats the solution at a pH below 8.0 at 75° to 95°C for 10 to 120 minutes. The two-step heating method forms aggregates of increased size that are suitable as a thickening and stabilizing food additive in infant and enteral formulas. The disclosed two-step heating process is complicated and requires additional, time-consuming process steps. Moreover, the initial heating step, which requires a pH above 8.0, may also be undesirable due to potential chemical changes to the protein agglomerates that are formed, such as degradation of the protein and amino acids thereby reducing the nutritional quality of the protein.

Other references disclose further methods to alter whey for use in a food product, but disclose methods that form whey agglomerates generally unsuitable for obtaining the desired functionality (i.e., firmness and smooth texture) in a high-moisture cheese. For example, US Patent No. 4,734,287 and its related patents disclose a method of altering whey that forms whey agglomerates having particles sizes between 0.1 to 2 microns with less than 2 percent of the agglomerates exceeding 3 microns. This patent discloses the altered whey as being suitable for a fat substitute in foods. When used in a high-moisture processed cheese, the altered whey from the '287 patent does not form a cheese with acceptable firmness or texture. For instance, a commercial version of whey altered according to the '287 patent (SIMPLESSE®, CP Kelco, Atlanta, GA) forms a relatively soft, high-moisture processed cheese.

On the other hand, US Patent No. 5,494,696 discloses a method of altering high concentrations of whey protein to form agglomerates having a mean particle size in the range from 30 to 60 $\mu$m. This reference discloses a method of altering whey that requires an initial whey protein to have 65 to 95 percent whey by weight relative to the dry matter. The whey is then diluted, preheated to 50°C to 70°C, and then heated during homogenization between 70°C and 98°C for 80 to 600 seconds. The resultant altered whey is useful in mayonnaise, salad dressings, meat mixtures, and ice cream. The complex process disclosed in the '696 patent requires a highly concentrated whey protein and multiple heating steps, which adds additional time and expense to manufacturing process.

Accordingly, it is desired to provide a simplified method of modifying whey protein such that the whey is suitable for use in a low-casein, high-moisture processed cheese where the mouthfeel, texture, and firmness of the processed cheese are similar to a conventional processed cheese.

SUMMARY OF THE INVENTION

The invention generally relates to a method of modifying whey to form a modified whey protein suitable for incorporation into a processed cheese having reduced levels of casein protein and increased levels of moisture to maintain a firmness and smooth texture similar to a traditional processed cheese. By maintaining the desired cheese firmness and texture with less casein and more moisture, manufacturing cost savings may be realized.

Preferably, the processed cheeses herein have between about 14 to about 16 per protein, about 45 to about 50 percent moisture; and a ratio of casein protein to whey protein of at least 60:40. In a most preferred formulation, the processed cheese include about 5.7 to about 6.3 percent total whey protein and about 8.5 to about 9.5 percent casein protein. As further detailed below, the total amount of whey protein preferably includes a combination of modified and non-modified whey proteins, but if desired the total whey protein in the processed cheese may include a completely modified whey protein.

The processed cheese is able to maintain the desired firmness and textures at such levels of casein and moisture through the incorporation of a sufficient amount of the appropriately modified whey protein in the cheese formulation. Preferably, the whey is modified through a thermal treatment at a predetermined whey protein concentration and at a predetermined pH for a time and temperature sufficient to form whey protein aggregates. It has been unexpectedly discovered that the incorporation of about 3 to about 6.3 percent (preferably about 3 to about 4.5 percent) of the modified whey protein in low-casein, high-moisture processed cheese increases the firmness to the desired levels and maintains the desired smooth texture of the cheese. On the other hand, the use of non-modified whey in a similar low-casein, high-moisture processed cheese does not exhibit such increases in firmness.

In a preferred method, before incorporation into the processed cheese, an aqueous solution of the whey is thermally treated at a whey protein concentration of about 7.5 percent or less and at a pH between 6 and about 7.6. The thermal treatment is preferably at about 180°F or greater for about 3 minutes or longer. Such thermal treatment is generally sufficient to form whey protein aggregates, which are generally about 20 to about 200 microns. It has been discovered that whey modified in such a manner can be incorporated into the above described processed cheese to maintain the cheese firmness (i.e., preferably about 1400 Pa or greater, and most preferably, about 1760 to about 5900 Pa).

BRIEF DESCRIPTION OF THE DRAWINGS

FIG. 1 is a process flowchart of a general method of modifying whey protein for use in a processed cheese;

FIG. 2 is a flowchart of a preferred embodiment of the method illustrated in FIG.1;

FIG. 3 is a flowchart of a general method of modifying whey protein for use in a processed cheese illustrating optional processing steps after a thermal treatment; and

FIG. 4 is a chart illustrating the yield stress of a reduced-casein, high-moisture processed cheese incorporating modified whey that has been processed at different pH levels and different whey protein concentrations.

## DESCRIPTION OF THE PREFERRED EMBODIMENTS

The invention is generally directed to a process of modifying whey such that the resultant modified whey is suitable for incorporation in a processed cheese having low levels of casein and high levels of moisture to maintain the desired texture and firmness of a traditional processed cheese. In one form, the method involves thermally treating whey at predetermined protein levels and within a predetermined pH range for a time and temperature sufficient to cause adequate protein denaturation and the formation of whey protein aggregates. Using the modified whey, a processed cheese may be produced using less high-cost ingredients (i.e., milk fat and casein protein) and more lower-cost ingredients (i.e., whey proteins and water) and still form a processed cheese having acceptable organoleptic characteristics.

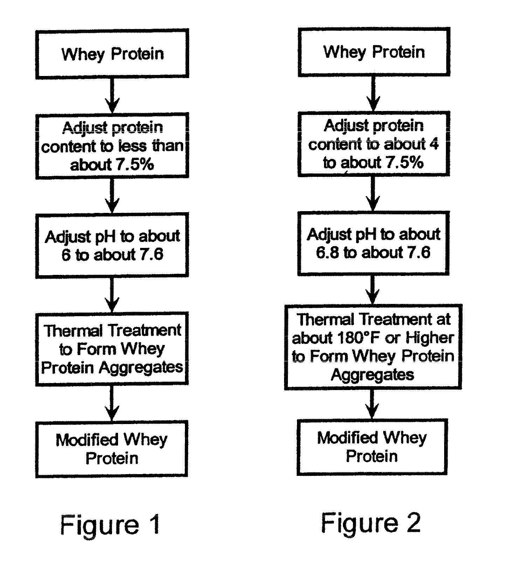

Referring to FIG. 1, a process flowchart is provided that illustrates a general method of modifying whey protein that is suitable for use in a low-casein, high-moisture processed cheese. In this method, the amount of whey protein in an aqueous mixture is first adjusted to about 7.5 percent or less. The solution pH is then adjusted to about 6 to about 7.6. Thereafter, the solution is subjected to a thermal treatment for a time and temperature suitable to cause protein denaturation and the formation of whey aggregates. As shown in FIG.1, the modified whey is then preferably incorporated into the processed cheese.

Referring to FIG. 2, a preferred form of the method of FIG. 1 is illustrated. In this preferred method, the amount of whey protein in the aqueous mixture is first adjusted to about 4 to about 7.5 percent. Next, the solution pH is then adjusted to about 6.8 to about 7.6. Thereafter, the solution is subjected to a thermal treatment at about 180°F or higher for a time sufficient (i.e., about 3 minutes or longer) to cause protein denaturation and subsequent formation of whey aggregates. The modified whey is then incorporated into the processed cheese.

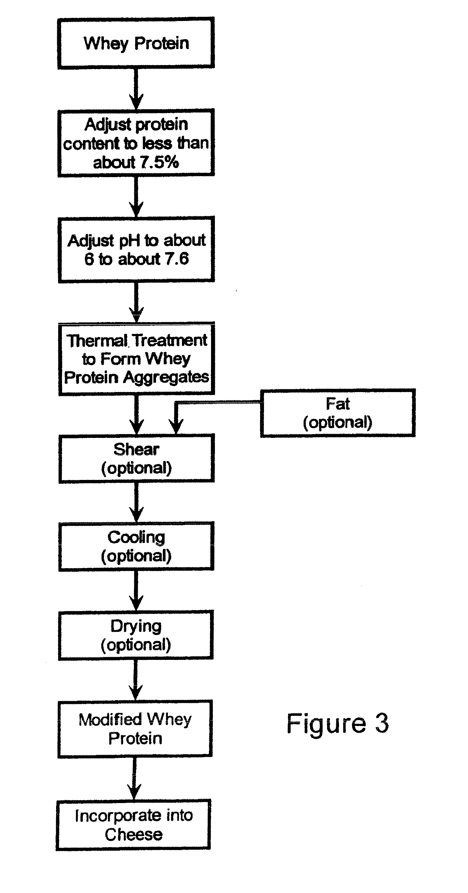

Referring to FIG. 3, after the above discussed thermal treatment, the modified whey may also be subjected to optional processing prior to its incorporation into a processed cheese. For instance, the method may also add additional ingredients to the modified whey, such as a fat. Also, the method may further include additional processing steps, such as shearing, cooling, or drying. The optional steps may be used as desired to provide for a particular form of the modified whey (i.e., solution or powder), a particular particle size, or particular characteristics to the food.

It is generally desired that the low-casein, high-moisture processed cheese exhibit a yield stress similar to a traditional processed cheese. For purposes of this application, the yield stress is measured by the "vane method" (Breidinger, S.L. and Steffe, J.F., J. Food Sci., 66:453-456 (2001)), which determines the maximum amount of torque for a predetermined number of vanes to fracture a sample. Yield stress is then calculated according to the following formula:

$$\text{Yield Stress (Pa)} = [2 \times M_f \times (H/D + 1/6)^{-1}]/(\pi D^3)$$

Where D is the vane blade diameter, H is vane blade height, and $M_f$ is the maximum torque achieved at sample fracture. Preferably, it is desired that the yield stress of the processed cheese is at least about 1400 Pa, preferably between about 1700 Pa and about 5900 Pa, and most preferably between about 2600 Pa and about 4400 Pa. Such yield stresses are similar to that exhibited by a traditional processed cheese.

Each step of a preferred method will now be described in more detail. To begin with, the raw material is preferably an aqueous solution of whey protein concentrate (WPC), such as a liquid WPC or a reconstituted WPC powder. It is preferred that the initial WPC has about 30 to about 55 percent protein in the dry matter; however, WPC with other protein levels may also be used.

Next, the protein content of the aqueous WPC solution is diluted to about 7.5 percent protein or less in the solution. For instance, the protein content is diluted by blending an amount of water into the solution until the desired protein content is achieved. Preferably, the protein content of the WPC solution is diluted to about 4 to about 7.5 percent protein. While not wishing to be limited by theory, it is believed that protein concentrations below the lower level (i.e., below about 4 percent) form a modified whey protein having loosely attached, weak agglomerates, which after the thermal treatment do not provide the desired firmness and texture to the processed cheese. On the other hand, protein concentrations above the upper level (i.e., greater that about 7.5 percent protein) formed very dense and closely packed agglomerates, which after thermal treatment formed large agglomerates that would precipitate, form grainy cheese, or generally not improve the firmness of the cheese.

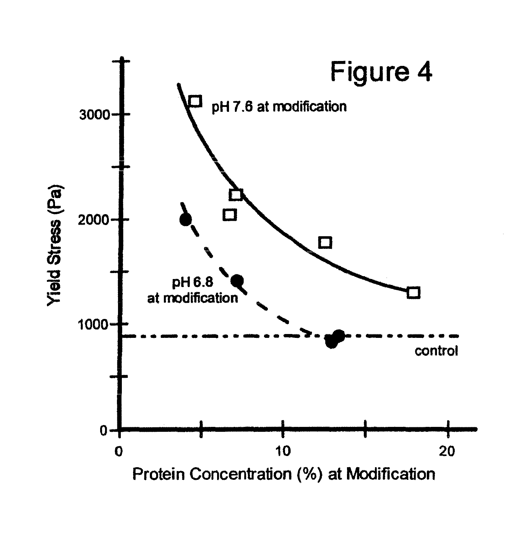

Prior to the thermal treatment, the pH of the protein-diluted aqueous WPC solution is preferably adjusted to about 6 to about 7.6, and most preferably, about 6.8 to about 7.6. In one instance, the pH is adjusted by adding appropriate amounts of 5N NaOH; however, other methods of adjusting the pH may also be used. Again, while not wishing to be limited by theory, it was discovered that thermally treating the whey at higher pH generally resulted in a modified whey protein that generated a firmer processed cheese. As further discussed below, the increase in cheese firmness based on protein concentration and pH is generally illustrated in the chart of FIG. 4.

Once the pH is adjusted between about 6 to about 7.6, the solution is then thermally treated using either direct or indirect heating techniques in either a continuous or batch system, preferably under constant agitation, for a time and temperature sufficient to form the whey protein agglomerates. In a continuous system, the whey solution is maintained under a constant state of agitation by flowing through a holding tube during heat treatment or optionally flowing through a liquefier or pump to impart a shear force on the solution. In a batch system, the whey solution is maintained under a constant state of agitation during thermal treatment via a mixing blade, ribbon, or other suitable mixing device.

Preferably, the solution is heated using direct steam injection to about 180°F or higher for about 3 minutes or longer. Most preferably, the solution is heated using steam injection to about 180°F to about 190°F for about 3 minutes to about 30 minutes. Heating the solution less than about 180°F is generally insufficient to form the necessary whey protein agglomerates. For instance, whey thermally treated at 170°F was not suitable for improving the functionality of processed cheese.

Preferably, the modified whey protein, as described above, is suitable for incorporation into a processed cheese either directly or after concentration, and in particular, into a processed cheese having lower casein protein levels, higher whey protein levels, and higher moisture levels than traditional processed cheeses. While the reduction in casein and increases in moisture generally lowers the firmness of processed cheese, it has been discovered that by incorporating the above described modified whey into the cheese, the firmness of the cheese is unexpectedly increased over a similar low-casein, high-moisture processed cheese with unmodified whey protein.

For instance, the addition of modified whey permits a processed cheese having about 9 percent or lower casein protein and about 45 to about 50 percent moisture to exhibit a firmness and texture of traditional processed cheese. In one instance, a smooth cheese having a yield stress greater than about 1400 Pa can be achieved by adding about 5.7 to about 6.3 percent total whey protein into such a processed cheese, which is partially or completely provided from the modified whey. Preferably, the processed cheese includes about 3 to about 6.3 percent (preferably about 3 to about 4.5 percent) of the modified whey protein.

In a preferred form, a process cheese prepared with the modified whey protein having about 50 percent moisture, about 18 percent fat, about 15 percent protein, and a casein to whey protein ratio of 60:40 exhibited a smooth texture and firmness values equal to or greater than a control cheese prepared with a similar composition but without the whey protein being modified as described above. As stated above, such processed cheese preferably exhibits a firmness of about 1400 Pa or greater.

In a most preferred composition, the processed cheese includes about 5.7 to about 6.3 percent total whey protein (preferably about 3 to about 4.5 percent modified whey protein), about 8.5 to about 9.5 percent casein protein, about 9.5 to about 10.5 percent lactose, about 17.1 to about 18.9 percent milk fat, about 2.5 percent emulsifying salt, about 1.8 percent salt, and about 45 to about 50 percent water. Such preferred formulation exhibited firmness levels from about 1400 Pa to about 3200 Pa and a smooth texture. In comparison, a similar low-casein, high-moisture processed cheese made using non-modified whey only exhibited a firmness level of about 900 Pa. The chart of FIG. 4, which will be discussed more fully in Examples 1 and 2 below, generally illustrates how the particular method of modifying the whey protein (i.e., protein concentration and pH) improves the firmness of a process cheese that incorporates the modified whey.

While suitable for use in a processed cheese after the above described thermal modification, the modified whey may also undergo optional process steps as generally illustrated in FIG. 3. For instance, the solution may optionally be pumped into a liquefier to disperse any large whey protein curds, be processed through a high shear pump, be homogenized, be cooled to less than about 80°F, or be spray dried. In addition, after thermal treatment, a fat may be added, such as a melted anhydrous milk fat, prior to further processing.

The Examples that follow are intended to illustrate, and not to limit, the invention. All percentages used herein are by weight, unless otherwise indicated.

<u>EXAMPLE 1</u>

In this example, whey protein at various protein levels and pH of 6.8 were modified according to the methods described previously to form a modified whey protein powder. The modified whey protein powders were then incorporated into a processed cheese having a standardized formula accordingly to Table 1 below. For comparison, a non-modified whey was also included in a processed cheese having the same standardized formula. The firmness of each processed cheese was tested using the vane method described above and a panel of taste testers evaluated the texture. The results of this experiment are shown in Table 2 below.

Table 1. Standardized formula of Process Cheese

| Ingredient | Amount, % |
|---|---|
| Whey protein | 6 |
| Casein protein | 9 |
| Lactose | 10 |
| Milk fat | 18 |
| Emulsifying Salt | 2.5 |
| Salt | 1.8 |
| Water | 50 |

Comparative Modified Whey A: A liquid WPC having about 34 percent whey protein was concentrated to about 47.7 percent solids prior to the modification process. The concentrated WPC was then diluted to about 39.3 percent solids (i.e., about 13.2 percent protein), heated to about 100°F and then the pH was adjusted from 6.3 to about 6.8 using additions of 5N NaOH. The liquid WPC at pH of about 6.8 was then heated to about 180°F by steam injection and then held in a holding tube for 3 minutes. The solution was then pumped into a Breddo Liquifier to disperse any large whey protein curds, sheared in a high shear pump, cooled to less than about 80°F, and then spray dried. Due to the dilution by the direct steam injection, the liquid modified WPC has a final solid content of 38.8 percent and a protein content of 13.1 percent.

To form a processed cheese having an approximate formulation according to table 1 above, 37.6 grams of the Comparative Modified Whey A was mixed with 48.2 grams milk protein concentrate, 3.9 grams of dried sweet whey, and 5.6 grams of sodium chloride in 144.5 grams of warm water. The dried sweet whey, which is preferably unmodified (however, it could be modified as well if desired), is added to the mixture mainly as a source of lactose. As shown in Table 1 above, the formulation is targeting 10 percent lactose. Depending on the modified whey, the amount of additional whey may be varied in order to achieve the desired amount of lactose.

Next, 52.7 grams of a melted anhydrous milk fat was then added to the solution to form a slurry. The pH of the slurry was adjusted to about 5.1 to about 5.15 through lactic acid (88% concentration) additions. After pH adjustment, 7.5 grams of disodium phosphate are added and the slurry was vigorously mixed until smooth and then processed in a Rapid-Visco-Analyzer (RVA) (Newport Scientific) sample canister according to the procedure of Kapoor and Metzger (Kapoor, R. and Metzger, L.E., J. Dairy Sci., 88:3382-3391 (2005)).

The cheese slurry was then heated in the RVA sample canister at a constant 1500 rpm mixing speed. The sample was equilibrated at 40°C and then heated to 60°C in about 90 seconds. The sample was then held at 60°C for an additional 60 seconds, and then further heated to 83°C in about 90 seconds. Thereafter, the sample was held at 83°C for an additional 180 seconds. After heating, about 25 grams of the hot cheese was poured into a plastic vial, cooled in a 5°C cooling bath, and then stored for 5 days at 5°C.

After 5 days, the cheese was warmed to room temperature and measured for yield stress, moisture, and pH. Yield stress was measured using the "vane method" as described previously. In this test, the vane blades had a diameter of about 0.6 cm, a height of about 1.0 cm, and were rotated at a rate of about 0.5 rpm. Results of the experiment using the Modified Whey A are summarized in Table 2 below.

Inventive Modified Whey B: A liquid WPC having about 34 percent whey protein was concentrated to about 47.7 percent solids prior to the modification process. The concentrated WPC was then diluted to about 25.0 percent solids (i.e., about 7.5 percent protein), heated to about 100°F and then the pH was adjusted from 6.3 to about 6.8 using additions of 5N NaOH. The liquid WPC at pH of about 6.8 was then heated to about 180°F by steam injection and then held in a holding tube for 3 minutes. The solution was then pumped into a Breddo Liquifier to disperse any large whey protein curds, sheared in a high shear pump, cooled to less than about 80°F, and then spray dried. Due to the dilution by the direct steam injection, the liquid modified WPC has a final solid content of 23.6 percent and a protein content of 7.1 percent.

To form a process cheese having an approximate formulation according to Table 1 above, 41.0 grams of the Inventive Modified Whey B was mixed with 48.2 grams of milk protein concentrate, 0.1 grams of dried sweet whey, 52.5 grams of anhydrous milk fat, 145.2 grams of water, 7.5 grams of disodium phosphate, and 5.6 grams of sodium chloride in a method similar to that described above with Modified Whey A. Results of the experiment using the Modified Whey B are also summarized in Table 2 below.

Inventive Modified Whey C: A powder of WPC having 34 percent protein was reconstituted to 15.32 percent solids (i.e., about 4.7 percent protein) in a Breddo Liquifier. The solution was then heated to 100°F and adjusted from a pH of 6.28 to a pH of 6.8 using 5N NaOH. The liquid WPC was then heated to 190°F by steam injection and held in a holding tube for 3 min, then pumped into a Breddo Liquifier and held for 30 minutes at about 180°F with continuous mixing to disperse any large whey protein curds. Next, the solution was sheared in a Silverson high shear pump, cooled to less than 100°F in a Votator, and the spray dried. Due to dilution from direct steam injection, the liquid modified WPC had a final solid content of 12.8 percent and a protein content of 4.0 percent.

To form a process cheese having an approximate formulation according to Table 1 above, 41.5 grams of the Inventive Modified Whey C was mixed with 48.2 grams of milk protein concentrate, 0.6 grams of dried sweet whey, 52.4 grams of anhydrous milk fat, 144.6 grams of water, 7.5 grams of disodium phosphate, and 5.3 grams of sodium chloride in a method similar to that described above with Modified Whey A. Results of the experiment using the Modified Whey C are also summarized in Table 2 below.

<u>Non-modified Whey:</u> As a comparison, a standard commodity whey protein concentrate at about 34 percent protein, which was not thermally modified, was also incorporated into a processed cheese.

To form a process cheese having an approximate formulation according to Table 1 above with the non-modified whey, 37.4 grams of the non-modified whey was mixed with 48.2 grams of milk protein concentrate, 4.5 grams of dried sweet whey, 52.3 grams of anhydrous milk fat, 144.6 grams of water, 7.5 grams of disodium phosphate, and 5.5 grams of sodium chloride in a method similar to that described above with Modified Whey A. Results of this comparative experiment with the non-modified whey are also summarized in Table 2 below.

Table 2. Process cheese results.

| | Comparative | | Inventive | |
|---|---|---|---|---|
| | Non-modified Whey | Modified Whey A | Modified Whey B | Modified Whey C |
| Whey Modification | | | | |
| Solids, % | - | 38.8 | 23.6 | 12.8 |
| Protein, % | - | 13.1 | 7.1 | 4.0 |
| pH | - | 6.8 | 6,8 | 6.8 |
| Temperature, °F | - | 180 | 180 | 190/180 |
| Time, min. | - | 3 | 3 | 3/30 |
| Processed Cheese Incorporating Whey | | | | |
| Yield Stress, Pa | 901 | 836 | 1410 | 1984 |
| Solids, % | 53.51 | 53.10 | 53.29 | 52.85 |
| Moisture, % | 46.5 | 46.9 | 46.7 | 47.2 |
| Modified Whey Protein, % | 4.2 | 4.2 | 4.1 | 4.3 |
| pH | 5.85 | 5.81 | 5.81 | 5.82 |
| Graininess | 1.0 | 5.8 | 4.0 | 1.3 |

The processed cheeses of Example 1 were also evaluated by a taste test panel to evaluate the texture of the cheese. The sampled cheese was rated on a scale from 1 to 10, with 1 being smooth and 10 being grainy. The graininess value, shown in Table 2, is an average of the rating from four different testers. In general, it is preferred that a cheese have a graininess rating less than about 4.5 and preferably about 1.

As can be seen from the data, preferred cheeses involve a combination of both a smooth texture and firmness. For instance, the non-modified whey produced a sample having a smooth texture, but resulted in an undesirable firmness. In this example, the modified whey B and C produced a high-moisture, low-casein processed cheese with the desired level of firmness together with a smooth texture.

<u>EXAMPLE 2</u>

In this example, whey protein at various protein concentrations were also modified according to the methods described previously, but at a pH 7.6. The modified whey protein powders were then incorporated into a processed cheese having a standardized formula accordingly to Table 1 above in Example 1. The firmness of each processed cheese was also tested using the vane method described above. The results are illustrated in Table 3 below.

Comparative Modified Whey D: A liquid WPC with 50 percent protein was first concentrated to 39.5 percent solids (i.e., about 19.5 percent protein) and then heated to 100°F where the pH was adjusted from 6.3 to 7.6 using 5N NaOH. The liquid WPC at pH 7.6 was then heated to 180°F by steam injection and held in a holding tube for 6 min. Afterwards, the WPC pumped into a Breddo Liquifier to disperse any large whey protein curds, sheared in a Silverson high shear pump, and spray dried. Due to dilution from direct steam injection, the liquid modified WPC had a final solid content of 35.9% and a protein content of 17.76%.

The Comparative Modified Whey D was then used to form a processed cheese having an approximate formulation as described above in Table 1 of Example 1. To form such a processed cheese, 22.4 grams of the Modified Whey D was mixed with 48.2 grams of milk protein concentrate, 19.6 grams of dried sweet whey, 52.5 grams of anhydrous milk fat, 144.4 grams of water, 7.5 grams of disodium phosphate, and 5.5 grams of sodium chloride in a method similar to that described above with Modified Whey A in Example 1. Results of the experiment using the Modified Whey D are summarized in Table 3 below.

Inventive Modified Whey E: A liquid WPC with 50 percent protein was first concentrated to 39.5 percent solids and then diluted to 14.7 percent solids (i.e., about 7.4 percent protein). The diluted WPC solution was heated to 100°F and the pH was adjusted from 6.3 to 7.6 using 5N NaOH. The liquid WPC at pH 7.6 was then heated to 180°F by steam injection and held in a holding tube for 6 min. Afterwards, the solution was pumped into a Breddo Liquifier to disperse any large whey protein curds, sheared in a Silverson high shear pump, and spray dried. Due to dilution from direct steam injection, the liquid modified WPC had a final solid content of 13.0 percent and a protein content of 6.6 percent.

The Modified Whey E was then used to form a processed cheese having an approximate formulation as described above in Table 1 of Example 1. To form such a processed cheese, 21.9 grams of the Modified Whey E was mixed with 48.2 grams of milk protein concentrate, 20.2 grams of dried sweet whey, 52.7 grams of anhydrous milk fat, 144.1 grams of water, 7.5 grams of disodium phosphate, and 5.5 grams of sodium chloride in a method similar to that described above with Modified Whey A in Example 1. Results of the experiment using the Modified Whey E are also summarized in Table 3 below.

Comparative Modified Whey F: A liquid WPC with 34 percent protein was first concentrated to 47.7 percent solids and then diluted to 38.4 percent solids (i.e., about 12.4 percent protein). The diluted solution was heated to 100°F and the pH adjusted from 6.3 to 7.6 using 5N NaOH. The liquid WPC at pH 7.6 was then heated to 180°F by steam injection and held in a holding tube for 3 min. After heating, the solution was pumped into a Breddo Liquifier to disperse any large whey protein curds, sheared in a Silverson high shear pump, cooled to less than 80°F in a Votator, and then spray dried. Due to dilution from direct steam injection, the liquid modified WPC had a final solid content of 38.4 percent and a protein content of 12.4 percent.

The Modified Whey F was then used to form a processed cheese having an approximate formulation as described above in Table 1 of Example 1. To form such a processed cheese, 38.9 grams of the Modified Whey F was mixed with 48.2 grams of milk protein concentrate, 1.7 grams of dried sweet whey, 52.7 grams of anhydrous milk fat, 145.3 grams of water, 7.5 grams of disodium phosphate, and 5.6 grams of sodium chloride in a method similar to that described above with Modified Whey A in Example 1. Results of the experiment using the Modified Whey F are also summarized in Table 3 below.

Inventive Modified Whey G: A liquid WPC at 34 percent protein was first concentrated to 43.7 percent solids and then diluted to 22.1 percent solids (i.e., about 7.5 percent protein). The diluted solution was heated to 88°F and the pH was adjusted from 6.6 to 7.6 using 5N NaOH. The liquid WPC at pH 7.6 was then heated to 190°F by steam injection and held in a holding tube for 3 min and then pumped into a Breddo Liquifier and held for 30 minutes with continuous mixing to disperse any large whey protein curds. Afterwards, the solution was sheared in a Silverson high shear pump, cooled to less than 80°F in a Votator, homogenized at 5000/500 PSI, and then spray dried. Due to dilution.from direct steam injection, the liquid modified WPC had a final solid content of 20.3 percent and a protein content of 6.9 percent.

The Modified Whey G was then used to form a processed cheese having an approximate formulation as described above in Table 1 of Example 1. To form such a processed cheese, 36.0 grams of the Modified Whey G was mixed with 48.2 grams of milk protein concentrate, 5.7 grams of dried sweet whey, 52.7 grams of anhydrous milk fat, 144.5 grams of water, 7.5 grams of disodium phosphate, and 5.5 grams of sodium chloride in a method similar to that described above with Modified Whey A in Example 1. Results of the experiment using the Modified Whey G are also summarized in Table 3 below.

Inventive Modified Whey H: A liquid WPC at 34 percent protein was first concentrated to 43.7 percent solids and then diluted to 14.2 percent solids (about 4.9 percent protein). The diluted solution was heated to 88°F and the pH was adjusted from 6.3 to 7.6 using 5N NaOH. The liquid WPC at pH 7.6 was then heated to 190°F by steam injection and held in a holding tube for 3 min and then pumped into a Breddo Liquifier and held for 30 minutes with continuous mixing to disperse any large whey protein curds. Afterwards, the solution was sheared in a Silverson high shear pump, cooled to less than 100°F in a Votator, homogenized at 5000/500 PSI, and then spray dried. Due to dilution from direct steam injection, the liquid modified WPC had a final solid content of 13.0% and a protein content of 4.5%.

The Modified Whey H was then used to form a processed cheese having an approximate formulation as described above in Table 1 of Example 1. To form such a processed cheese, 35.3 grams of the Modified Whey H was mixed with 48.2 grams of milk protein concentrate, 5.4 grams of dried sweet whey, 52.7 grams of anhydrous milk fat, 145.3 grams of water, 7.5 grams of disodium phosphate, and 5.5 grams of sodium chloride in a method similar to that described above with Modified Whey A in Example 1. Results of the experiment using the Modified Whey H are also summarized in Table 3 below.

Table 3. Process cheese results.

| | Comparative | | | Inventive | | |
|---|---|---|---|---|---|---|
| | Non-Modified Whey (from Ex 1) | Modified Whey D | Modified Whey F | Modified Whey E | Modified Whey G | Modified Whey H |
| Whey Modification | | | | | | |
| Solids, % | - | 35.9 | 38.4 | 13.0 | 20.3 | 13.0 |
| Protein, % | - | 17.8 | 12.4 | 6.6 | 6.9 | 4.5 |
| pH | - | 7.6 | 7.6 | 7.6 | 7.6 | 7.6 |
| Temp,°F | - | 180 | 180 | 180 | 190 | 190 |
| Time, min. | - | 6 | 3 | 6 | 3 | 3 |
| Processed Cheese Incorporating Whey | | | | | | |
| Yield Stress, Pa | 901 | 1287 | 1769 | 2043 | 2241 | 3115 |
| Solids, % | 53.51 | 53.29 | 53.15 | 53.33 | 52.93 | 52.42 |
| Moisture, % | 46.5 | 46.7 | 46.9 | 46.7 | 47.1 | 47.6 |
| Modified Whey Protein, % | 4.2 | 3.7 | 4.1 | 3.7 | 4.1 | 4.1 |
| pH | 5.85 | 5.77 | 5.78 | 5.74 | 5.80 | 5.81 |
| Graininess | 1.0 | 4.8 | 8.0 | 4.3 | 1.3 | 1.8 |

Similar to Example 1, the cheese of Example 2 were also evaluated by a panel of taste testers using a rating scale as described above in Example 1. In this example, modified whey E, G, and H resulted in a high-moisture, low-casein processed cheese having acceptable firmness and graininess. Modified whey F, while producing a desirable firmness, formed a processed cheese having an undesirable grainy texture.

Referring now to FIG. 4 in more detail, a chart is provided that illustrates the unexpected results of using the modified whey from Examples 1 and 2 above in a process cheese having low levels of casein and increased moisture. The chart of FIG. 4 illustrates the processed cheese firmness, which was measured by the vane method, for cheeses using whey modified at various whey protein concentrations and pH levels during thermal treatment.

In general, it was discovered that the whey modified at lower concentrations (i.e., preferably about 7.5 percent or less, and most preferably, between about 4 and about 7.5 percent) provided a firmer processed cheese with a smooth texture as compared to the control processed cheese that used the non-modified whey. In the chart of FIG. 4, the line labeled control is the yield stress of a processed cheese having approximately the same levels of casein and moisture as the other comparative and inventive samples, but includes non-modified whey. Furthermore, it was also discovered that the whey modified at higher pH also generally provided a more firm cheese as compared to the processed cheese without the modified whey or processed cheese with whey modified at lower pH.

As a result, as can be seen in FIG. 4, the chart illustrates the preferred parameters to modify whey protein for use in a low-casein, high-moisture processed cheese to obtain the desired cheese firmness as including a whey thermally modified at a protein level between about 4 and about 7.5 percent and at a pH between about 6 and about 7.6. Such conditions form modified whey that can be used in the low-casein, high-moisture processed cheese to maintain the desired firmness, which is preferably about 1400 Pa or higher.

COMPARATIVE EXAMPLE 3

The commercial version of the altered whey protein concentrate of US 4,734,287 (i.e., SIMPLESSE®, CP Kelco, Atlanta, GA) was incorporated into a high moisture processed cheese and tested for firmness. In addition, a high moisture cheese using standard non-modified WPC34 was also prepared.

For each sample, the processed cheeses were manufactured using a pilot plant 70-lb batch cooker. The table 4 below provides the final cheese composition and firmness values. In this experiment, the firmness was measured by a penetrometer in units of mm. A higher penetrometer value indicates soft cheese. Preferred ranges of penetrometer values for processed cheese are from 12 to 20 mm. Firmness values above 20 mm indicate a cheese that is undesirably soft.

As illustrated in Table 4, high-moisture processed cheese made with SIMPLESSE® produced a similarly soft cheese as that made with non-modified commodity WPC34. As a result, no texture benefit was obtained from SIMPLESSE® in a processed cheese system having greater than about 45 percent moisture.

Table 4. Processed Cheese Results

|  | Non-modified WPC34 | Simplesse 500 |
|---|---|---|
| Moisture, % | 46.2 | 46.3 |
| Protein, % | 15.9 | 15.2 |
| Fat, % | 22.7 | 22.5 |
| pH | 5.65 | 5.57 |
| Penetrometer, mm | 23.2 | 21.2 |

It will be understood that various changes in the details, materials, and arrangements of formulations and ingredients, which have been herein described and illustrated in order to explain the nature of the invention may be made by those skilled in the art within the principle and scope of the invention as expressed in the appended claims.

**Claims**

1. A method of forming a processed cheese, the method comprising:

   thermally treating whey having a protein concentration from about 4 to about 7.5 percent and a pH from about 6 to about 7.6 to form a modified whey with modified whey protein;
   concentrating the modified whey to form a concentrated modified whey;
   blending the concentrated modified whey with a milk protein to form a slurry;
   heating the slurry for a time and temperature sufficient to form the processed cheese;
   wherein the processed cheese comprises between about 14 to about 16 percent protein, the protein including casein protein and whey protein; about 45 to about 50 percent moisture; and a ratio of casein protein to whey protein at least about 60:40; and
   wherein the processed cheese further comprises about 3 to about 6.3 percent modified whey protein and has a firmness greater than about 1400 Pa with a generally smooth texture.

2. The method of claim 1, wherein the whey is thermally treated at about 180°F or higher for at least about 3 minutes.

3. The method of claim 1 or 2, wherein the whey is thermally treated at a pH between about 6.8 and about 7.6.

4. The method of any one of Claims 1 to 3, wherein the processed cheese comprises about 3 to 4.5 percent modified whey protein.

5. The method of any one of Claims 1 to 4, wherein the processed cheese comprises about 5.7 to about 6.3 percent whey protein and about 8.5 to about 9.5 percent casein protein.

6. The method of any one of Claims 1 to 5, wherein the processed cheese has a yield stress between about 1700 Pa and 5900 Pa.

7. The method of any one of Claims 1 to 6, wherein the processed cheese has a yield stress between about 2600 Pa and about 4400 Pa.

8. The method of any one of Claims 1 to 7, further comprising maintaining the whey in a constant state of agitation during thermal treatment.

9. The method of claim 8, wherein the whey is sheared during thermal treatment.

10. The method of Claim 9, further comprising cooling the sheared modified whey to less than 100°F.

11. A processed cheese comprising:

about 14 to about 16 percent protein, the protein including casein protein and total whey protein;
about 45 to about 50 percent moisture;
a ratio of casein protein to total whey protein of at least about 60:40;
about 3 to about 6.3 percent whey protein thermally treated at a protein concentration from about 4 to about 7.5 percent and a pH from about 6 to about 7.6;
a yield stress greater than about 1400 Pa; and
wherein the processed cheese has a generally smooth texture.

12. The processed cheese of claim 11, wherein the whey protein is thermally treated at about 180°F or higher for at least about 3 minutes.

13. The processed cheese of claim 11 or 12 wherein the whey protein is thermally treated at a pH between about 6.8 and 7.6.

14. The processed cheese of any one of Claims 11 to 13, wherein the processed cheese comprises about 3 to about 4.5 percent thermally treated whey protein.

15. The processed cheese of any one of claims 11 to 14, further comprising about 5.7 to about 6.3 percent total whey protein and about 8.5 to about 9.5 percent casein protein.

16. A method of modifying whey comprising:

providing a whey protein concentrate having between about 34 percent and about 50 percent whey protein in the dry matter;
diluting an aqueous solution of the whey protein concentrate to about 4 to about 7.5 percent whey protein to form a dilute whey protein concentrate solution;
adjusting the pH of the dilute whey protein concentrate solution to about 6 to about 7.6; and
thermally treating the pH adjusted dilute whey protein concentrate solution in a constant state of agitation for at least 3 minutes at 180°F to form a modified whey solution having whey protein aggregates.

17. The method of claim 16, wherein the constant state of agitation is continuously flowing the pH adjusted dilute whey protein solution through a liquefier.

18. The method of claim 16 or 17 wherein the constant state of agitation is subjecting a shear force to the pH adjusted dilute whey protein solution.

19. The method of any one of Claims 16 to 18, further comprising cooling the modified whey solution to less than about 100°F to form a cooled modified whey solution.

20. The method of Claim 19, further comprising homogenizing the cooled modified whey solution to form a homogenized whey solution.

21. The method of claim 20, further comprising spray drying the homogenized modified whey solution to form a dried modified whey solution.

**22.** The method of any one of Claims 16 to 21 wherein the pH is adjusted to about 6.8 to about 7.6.

```
┌─────────────────┐              ┌─────────────────┐
│  Whey Protein   │              │  Whey Protein   │
└─────────────────┘              └─────────────────┘
         │                                │
         ▼                                ▼
┌─────────────────┐              ┌─────────────────┐
│  Adjust protein │              │  Adjust protein │
│content to less  │              │content to about 4│
│  than about 7.5%│              │  to about 7.5%  │
└─────────────────┘              └─────────────────┘
         │                                │
         ▼                                ▼
┌─────────────────┐              ┌─────────────────┐
│ Adjust pH to    │              │ Adjust pH to    │
│ about 6 to      │              │ about 6.8 to    │
│ about 7.6       │              │ about 7.6       │
└─────────────────┘              └─────────────────┘
         │                                │
         ▼                                ▼
┌─────────────────┐              ┌─────────────────┐
│Thermal Treatment│              │Thermal Treatment at│
│ to Form Whey    │              │ about 180°F or Higher│
│Protein Aggregates│             │to Form Whey Protein│
└─────────────────┘              │   Aggregates    │
         │                       └─────────────────┘
         ▼                                │
┌─────────────────┐                       ▼
│ Modified Whey   │              ┌─────────────────┐
│   Protein       │              │ Modified Whey   │
└─────────────────┘              │   Protein       │
                                 └─────────────────┘
```

## Figure 1                    ## Figure 2

Figure 3

Figure 4

European Patent Office

# EUROPEAN SEARCH REPORT

Application Number

EP 07 10 7511

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 525 791 A (STAUFFER CHEMICAL CO) 20 September 1978 (1978-09-20) * the whole document * ----- | 1-22 | INV. A23C19/08 A23J1/20 A23J3/08 |
| X | DE 199 06 379 A1 (HUS MANFRED [DE]; SPIEGEL THOMAS [DE]) 17 August 2000 (2000-08-17) * page 4, lines 19-23; claims 1-12 * * page 5, lines 32-54 * ----- | 1-22 | |
| X | GB 1 079 604 A (GENVRAIN SA) 16 August 1967 (1967-08-16) | 16-22 | |
| A | * claims * ----- | 1-15 | |
| X | US 4 265 924 A (BUHLER MARCEL ET AL) 5 May 1981 (1981-05-05) | 16-22 | |
| A | * column 3, lines 33-42; example 4 * ----- | 1-15 | |
| X | DE 30 43 691 A1 (STICHTING BEDRIJVEN VAN HET [NL]) 27 May 1981 (1981-05-27) | 16-22 | |
| A | * claims * | 1-15 | TECHNICAL FIELDS SEARCHED (IPC) |
| D,X | & GB 2 063 273 A (STICHTING BEDRIJVEN VAN HET) 3 June 1981 (1981-06-03) | 16-22 | A23C A23J |
| A | ----- | 1-15 | |
| X | DE 18 11 341 A1 (GENVRAIN SA) 14 August 1969 (1969-08-14) | 16-22 | |
| A | * page 7, paragraph 5 - page 8, paragraph 1; claims 1,13-15 * ----- | 1-15 | |
| X | US 2002/164401 A1 (SATO KAORU [JP] ET AL) 7 November 2002 (2002-11-07) * example 3 * ----- | 16-22 | |

The present search report has been drawn up for all claims

| Place of search | Date of completion of the search | Examiner |
|---|---|---|
| The Hague | 18 July 2007 | Koch, Jürgen |

**ANNEX TO THE EUROPEAN SEARCH REPORT
ON EUROPEAN PATENT APPLICATION NO.**                    EP 07 10 7511

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2007

| Patent document cited in search report | | Publication date | Patent family member(s) | | Publication date |
|---|---|---|---|---|---|
| GB 1525791 | A | 20-09-1978 | BE | 838139 A2 | 30-07-1976 |
| DE 19906379 | A1 | 17-08-2000 | AT | 239381 T | 15-05-2003 |
| | | | AU | 3145600 A | 04-09-2000 |
| | | | WO | 0048473 A1 | 24-08-2000 |
| | | | DE | 19964370 B4 | 11-05-2006 |
| | | | EP | 1154700 A1 | 21-11-2001 |
| | | | US | 6767575 B1 | 27-07-2004 |
| GB 1079604 | A | 16-08-1967 | BE | 675334 A | 16-05-1966 |
| | | | DE | 1692319 A1 | 29-07-1971 |
| | | | FR | 1453815 A | 22-07-1966 |
| | | | NL | 6600500 A | 25-07-1966 |
| | | | SE | 345790 B | 12-06-1972 |
| US 4265924 | A | 05-05-1981 | AR | 223486 A1 | 31-08-1981 |
| | | | AT | 363767 B | 25-08-1981 |
| | | | AT | 348779 A | 15-01-1981 |
| | | | AU | 519300 B2 | 19-11-1981 |
| | | | AU | 4630179 A | 15-11-1979 |
| | | | CA | 1119166 A1 | 02-03-1982 |
| | | | CH | 630243 A5 | 15-06-1982 |
| | | | DE | 2914301 A1 | 15-11-1979 |
| | | | ES | 480418 A1 | 16-12-1979 |
| | | | FI | 791461 A | 12-11-1979 |
| | | | GB | 2020667 A | 21-11-1979 |
| | | | IE | 48363 B1 | 26-12-1984 |
| | | | IT | 1164681 B | 15-04-1987 |
| | | | MX | 5556 E | 06-10-1983 |
| | | | NL | 7903295 A | 13-11-1979 |
| | | | NZ | 190180 A | 28-11-1980 |
| | | | SE | 445704 B | 14-07-1986 |
| | | | SE | 7904010 A | 12-11-1979 |
| | | | ZA | 7901958 A | 28-05-1980 |
| DE 3043691 | A1 | 27-05-1981 | BE | 886251 A2 | 19-05-1981 |
| | | | FR | 2469878 A1 | 29-05-1981 |
| | | | GB | 2063273 A | 03-06-1981 |
| | | | IE | 50403 B1 | 16-04-1986 |
| | | | NL | 8006237 A | 16-06-1981 |
| GB 2063273 | A | 03-06-1981 | BE | 886251 A2 | 19-05-1981 |
| | | | DE | 3043691 A1 | 27-05-1981 |
| | | | FR | 2469878 A1 | 29-05-1981 |
| | | | IE | 50403 B1 | 16-04-1986 |
| | | | NL | 8006237 A | 16-06-1981 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                    EP 07 10 7511

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2007

| Patent document cited in search report | | Publication date | Patent family member(s) | | Publication date |
|---|---|---|---|---|---|
| DE 1811341 | A1 | 14-08-1969 | BE | 724386 A | 02-05-1969 |
| | | | FR | 1555757 A | 31-01-1969 |
| | | | GB | 1243988 A | 25-08-1971 |
| | | | LU | 57419 A1 | 04-03-1969 |
| | | | NL | 6816987 A | 03-06-1969 |
| | | | SE | 351777 B | 11-12-1972 |
| | | | US | 3644326 A | 22-02-1972 |
| US 2002164401 | A1 | 07-11-2002 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 11301450 A
- GB 2063273 A
- US 6139900 A
- US 4734287 A
- US 5494696 A

**Non-patent literature cited in the description**

- **BREIDINGER, S.L. ; STEFFE, J.F.** *J. Food Sci.,* 2001, vol. 66, 453-456
- **KAPOOR, R. ; METZGER, L.E.** *J. Dairy Sci.,* 2005, vol. 88, 3382-3391